# EUROPEAN PATENT SPECIFICATION

(11) **EP 0 980 197 B1**
(45) Date of publication and mention of the grant of the patent: **17.10.2007**
(21) Application number: 99306281.9
(22) Date of filing: 09.08.1999
(51) Int. Cl.: H05H 1/34

(54) **Electrode for plasma ARC torch and method of making the same**
Elektrode für Plasma-Lichtbogensbrenner und Verfahren zur deren Herstellung
Electrode pour torche à plasma d'arc et son procédé de fabrication

(30) Priority: 12.08.1998 US 132918
(43) Date of publication of application: 16.02.2000
(73) Proprietor: THE ESAB GROUP, INC., Florence, South Carolina 29501-0545 (US)
(72) Inventor: Marner, Alfred William, Florence, South Carolina 29501 (US); Severance, Wayne Stanley, Darlington, South Carolina 29532 (US); Stokes, Larry Wade, Florence, South Carolina 29501 (US); Turner, Tommie Zack, Darlington, South Carolina 29532 (US); Lynch, Rue Allen, Florence, , South Carolina 29501 (US); Nemchinsky, Valerian, Florence, , South Carolina 29501 (US)
(74) Representative: MacDougall, Donald Carmichael

(56) References cited:
- EP-A- 0 437 915
- EP-A- 0 465 109
- US-A- 3 930 139

## Description

### Field of the Invention

The present invention relates to plasma arc torches and, more particularly, to an electrode for supporting an electric arc in a plasma arc torch.

### Background of the Invention

Plasma arc torches are commonly used for the working of metals, including cutting, welding, surface treatment, melting, and annealing. Such torches include an electrode which supports an arc which extends from the electrode to the workpiece in the transferred arc mode of operation. It is also conventional to surround the arc with a swirling vortex flow of gas, and in some torch designs it is conventional to also envelop the gas and arc with a swirling jet of water.

The electrode used in conventional torches of the described type typically comprises an elongate tubular member composed of a material of high thermal conductivity, such as copper or a copper alloy. The forward or discharge end of the tubular electrode includes a bottom end wall having an emissive element embedded therein which supports the arc. The element is composed of a material which has a relatively low work function, which is defined in the art as the potential step, measured in electron volts (ev), which permits thermionic emission from the surface of a metal at a given temperature. In view of its low work function, the element is thus capable of readily emitting electrons when an electrical potential is applied thereto, and commonly used emissive materials include hafnium, zirconium, tungsten, and their alloys.

A significant problem associated with torches of the described type is the short service life of the electrode, particularly when the torch is used with an oxidizing gas such as oxygen or air. More particularly, the gas tends to rapidly oxidize the copper of the electrode which surrounds the emissive element, and as the copper oxidizes its work function decreases. As a result, a point is reached at which the oxidized copper surrounding the emissive element begins to support the arc, rather than the element. When this happens, the copper oxide and the supporting copper melt, resulting in early destruction and failure of the electrode.

The assignee of the present application has previously developed an electrode with significantly improved service life, as described in U.S. Patent No. 5, 023, 425, (EP-A-437915, which is considered as the closest prior art to the invention) and a method for making such an electrode, as described in U.S. Patent No. 5,097,111. The '425 patent discloses an electrode comprising a metallic tubular holder supporting an emissive element at a front end thereof, and having a relatively non-emissive separator or sleeve surrounding the emissive element and interposed between the emissive element and the metallic holder. The sleeve thereby separates the emissive element from the holder. The '425 patent describes the sleeve as preferably being formed of silver which has a high resistance to formation of an oxide. The silver and any oxide thereof which does form are poor emitters, and therefore, the arc will continue to emit from the emissive element rather than from the sleeve or the metallic holder. Service life is thereby significantly extended. The sleeve has an end face flush with the ends of the holder and emissive element, the end face in one embodiment being defined by a radially outwardly extending annular flange portion of the sleeve.

The 111 patent discloses a method for making an electrode which includes the steps of forming a counterbored cavity in the front face of a cylindrical blank of copper or copper alloy, the cavity including an annular outer end portion for receiving the annular flange portion of a non-emissive member. A second metal blank of relatively non-emissive material, preferably silver, is formed to substantially fit within the cavity. The non-emissive blank is then metallurgically bonded into the cavity by first inserting a disk of silver brazing material into the cavity, then inserting the non-emissive blank. The assembly is then heated to a temperature only sufficient to melt the brazing material, and during the heating process the non-emissive blank is pressed into the cavity, which causes the brazing material to flow upwardly and cover the entirety of the interface between the non-emissive blank and the cavity. The assembly is then cooled, resulting in the brazing material metallurgically bonding the element into the non-emissive blank. Next, the non-emissive blank is axially drilled and a cylindrical emissive element is force fitted into the resulting opening. To complete fabrication of the electrode, the front face of the assembly is machined to provide a smooth outer surface which includes a circular outer end face of the emissive element, a surrounding annular ring of the non-emissive blank, and an outer ring of the metal of the holder.

Published Japanese Patent Application No. 4-147772, filed on October 8, 1990 and published on May 21, 1992, describes a plasma arc torch electrode having a copper holder and a cylindrical function insert for supporting an arc, and a metal spacer disposed between the function insert and the holder for establishing thermal and electrical coupling therebetween. As is conventional in plasma arc torches, the holder is cooled by circulating a coolant through the interior of the holder. The patent application describes as an object of the metal spacer to increase the thermal transfer ratio between the holder and the function insert so that improved cooling of the function insert can be attained, which is said to increase the life of the electrode. The metal spacer ' consists of a hollow cylindrical member open on both ends and surrounding the cylindrical function insert. The metal spacer in one embodiment is composed of a silver alloy containing 24-95 percent silver and 5-74 percent copper. This alloy is said to accomplish the goal of achieving a lower melting point for the metal spacer than for the holder and the function insert, such that the metal layer between the function insert and the holder melts before either of those members and flows between them, thus protecting the holder from the plasma arc and absorbing the heat from the tip end of the function insert by the latent heat of evaporation. The copper content of the alloy is said also to facilitate diffusion bonding both with the copper holder and with the emissive element which is composed of hafnium or an alloy thereof, or zirconium or an alloy thereof. The patent application states that the radial thickness of the metal spacer should be 0.01-0.8 mm, and that greater thickness is undesirable because then the whole metal layer of the spacer can melt and allow the function insert to fall out of the holder.

### Summary of the Invention

The present invention was developed to improve upon the electrode disclosed in the above-referenced '425 patent in terms of the length and consistency of the service life of the electrode.

It has been discovered that with the electrode of the '425 patent, the service life can be quite sensitive to the specific composition of the silver alloy used for the non-emissive member, and that the life varies in an unexpected manner with changes in the composition. The present invention provides an electrode having a relatively non-emissive separator made from a specific silver alloy which makes possible significantly increased service life for the electrode.

More particularly, in accordance with one preferred embodiment of the invention, an electrode for supporting an electric arc in a plasma arc torch comprises a metallic holder having a front face with a receptacle formed in the front face. A relatively non-emissive separator is mounted in the receptacle, and has a cavity formed therein. The relatively non-emissive separator is constructed of silver alloyed with 0.5 to 4 percent of a material selected from the group consisting of copper, aluminum, iron, lead, zinc, and alloys thereof. These materials may be in elemental form or in the form of oxides. An emissive element formed of a material having a relatively low work function is mounted in the cavity of the relatively non-emissive separator such that the separator is interposed between and separates the metallic holder from the emissive element at the front face of the holder.

It has been discovered that, surprisingly, the service life of electrodes made in accordance with the invention is greater on average than that of otherwise identical electrodes having the relatively non-emissive separator formed of silver alloy containing substantially more than about 4 percent of copper. Furthermore, it has been found that the service life is degraded if the silver is too pure. For example, electrodes having the relatively non-emissive separator made of substantially pure silver (e.g., 0.9997 fine silver) have significantly shorter service lives on average than otherwise identical electrodes having the relatively non-emissive separator made of silver with 0.5 percent copper.

It has also been found that, surprisingly, the selection of the composition of the separator must take into account the geometry of the separator and the method by which electrodes are constructed in order to assure that electrodes having acceptable service life are produced. For instance, when the separator is sterling silver (92.5 percent silver and the balance copper or other material) and is formed in a rivet-type shape having a cylindrical body and an annular flange which defines the outer face of the separator, it has been found that electrodes have relatively short service lives if they are made by a process of cold deforming the emissive insert and the separator within the copper holder so as to cause those members to expand radially and be gripped and retained in the holder. However, when the same configuration of separator is made of silver having a lower percentage of copper, such as about 2-3 percent, the cold deforming method is capable of producing electrodes having substantially longer service lives. In contrast, where the separator does not include the annular flange, the cold deforming method works well with silver alloys of about 0.25 to 10 percent copper.

A corresponding method (not being part of the invention) for making an electrode for a plasma arc torch, which is relatively simple and economical, comprises forming a metallic holder by forming a receptacle in a generally planar front face of a metallic blank, the receptacle extending along an axis generally normal to the front face and including an end wall within the blank. A relatively non-emissive separator is formed from a plastically deformable relatively non-emissive material such that the relatively non-emissive separator has an outer surface extending between first and second end faces. The outer surface of the relatively non-emissive separator is configured to fit closely within the receptacle in the metallic holder, and the length of the relatively non-emissive separator is such that the first end face is generally planar and lies adjacent the front end of the metallic holder when the second end face is abutting the end wall of the receptacle. A cavity is formed in the first end face of the relatively non-emissive separator. The method further comprises forming an emissive element from a plastically deformable material having a work function lower than that of the relatively non-emissive separator, such that the emissive element is slidably insertable into the cavity in the separator and when fully inserted thereinto substantially completely fills the cavity and has an end face lying generally flush with the first end face of the separator.

To assemble the electrode, the separator is inserted into the receptacle of the metallic holder such that the second end face of the separator abuts the end wall of the receptacle and the first end face of the separator is adjacent the front face of the metallic holder. The emissive element is inserted into the cavity of the separator until the end face of the emissive element is generally flush with the first end face of the separator. Force is then applied to the end face of the emissive element and the first end face of the separator in a direction generally parallel to the axis of the metallic holder so as to plastically deform the emissive element and the separator radially outwardly until the emissive element is tightly gripped and retained by the relatively non-emissive separator and the separator is tightly gripped and retained by the metallic holder.

In one example not forming part of the invention, the separator is formed to have a hollow cylindrical body and a bottom wall which closes one end of the body, and the separator is constructed of silver alloyed with about 0.25 to 10 percent of copper.

In another preferred embodiment of the invention, the separator is formed to have a hollow cylindrical body, a bottom wall closing one end of the body, and an annular flange joined to the other end of the body. The separator is constructed of silver alloyed with about 0.5 to 4 percent, and more preferably 2-3 percent, of copper.

Advantageously, the emissive element and the relatively non-emissive separator are plastically deformed by striking the end face of the emissive element and the first end face of the separator with a generally planar circular working surface of a tool, the outer diameter of the working surface being slightly smaller in diameter than the receptacle of the metallic holder.

Preferably, a generally flat end face is then formed on the electrode by machining the front end of the metallic holder, the first end face of the relatively non-emissive separator, and the end face of the emissive element to be generally flat and flush with one another.

### Brief Description of the Drawings

The aforementioned and other objects, features, and advantages of the invention will become more apparent from the following description of certain preferred embodiments thereof, when taken in conjunction with the accompanying drawings in which:
FIG. 1 is a sectioned side elevational view of a plasma arc torch which embodies the features of the present invention;
FIG. 2 is an enlarged perspective view of an electrode in accordance with the present invention;
FIG. 3 is an enlarged sectioned side elevational view of an electrode in accordance with the present invention;
FIGS. 4-7 are schematic views illustrating the steps of a method (not being part of the invention) of fabricating the electrode
FIG. 8 is an end elevational view of the finished electrode;
FIG. 9 is a view similar to FIG. 6, showing the forming method of the invention as applied to an electrode having a rivet-type separator;
FIG. 10 is a view similar to FIG. 3, showing the finished electrode having the rivet-type separator; and
FIG. 11 is a graph which presents results of testing electrodes made in accordance with the invention, showing total electrode life as a function of the percentage of copper content for the silver alloy separator.

### Detailed Description of the Drawings

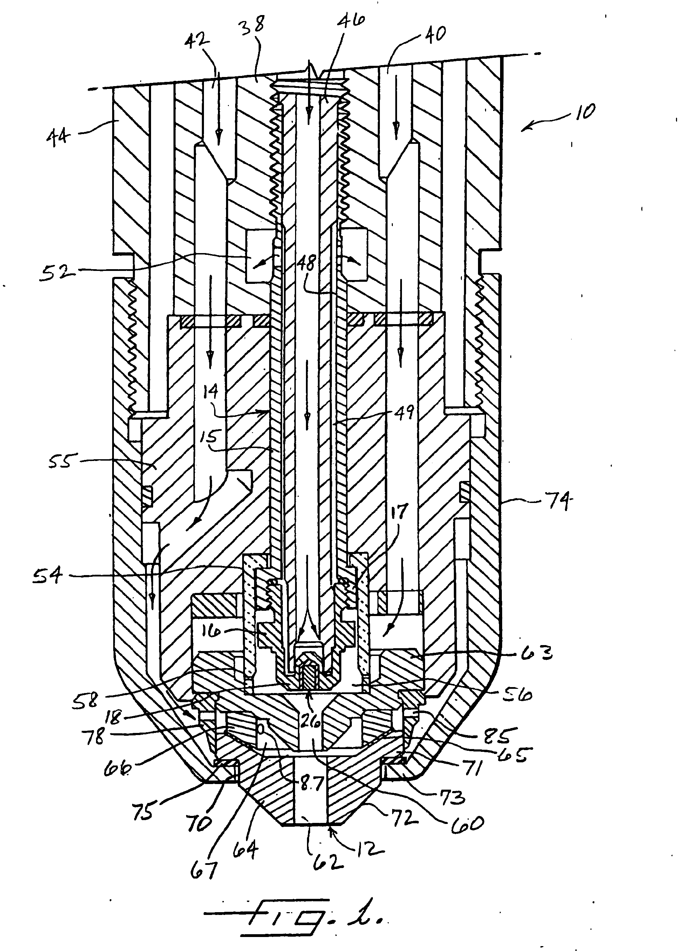

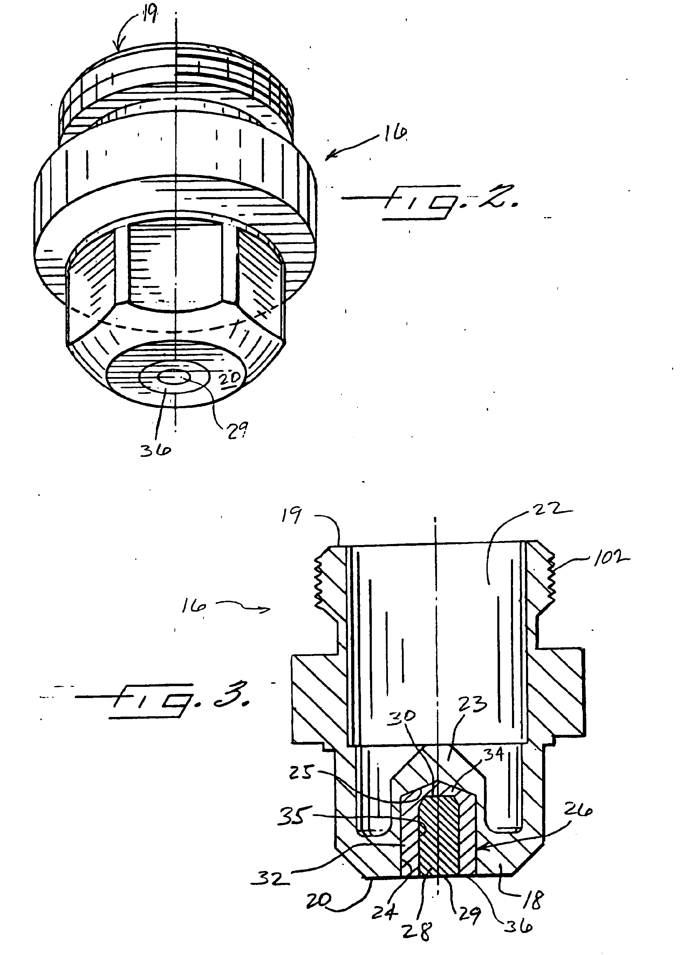

With reference to FIG. 1, a plasma arc torch **10** embodying the features of the present invention is depicted. The torch **10** includes a nozzle assembly **12** and a tubular electrode **14**. The electrode **14** preferably is made of copper or a copper alloy, and is composed of an upper tubular member **15** and a lower cup-shaped member or holder **16**. The upper tubular member **15** is of elongate open tubular construction and defines the longitudinal axis of the torch **10**. The upper tubular member **15** includes an internally threaded lower end portion **17**. The holder **16** is also of tubular construction, and includes a lower front end and an upper rear end. A transverse end wall **18** closes the front end of the holder **16**, and the transverse end wall **18** defines an outer front face **20** (FIG. 2). The rear end of the holder **16** is externally threaded and is threadedly joined to the lower end portion **17** of the upper tubular member **15**.

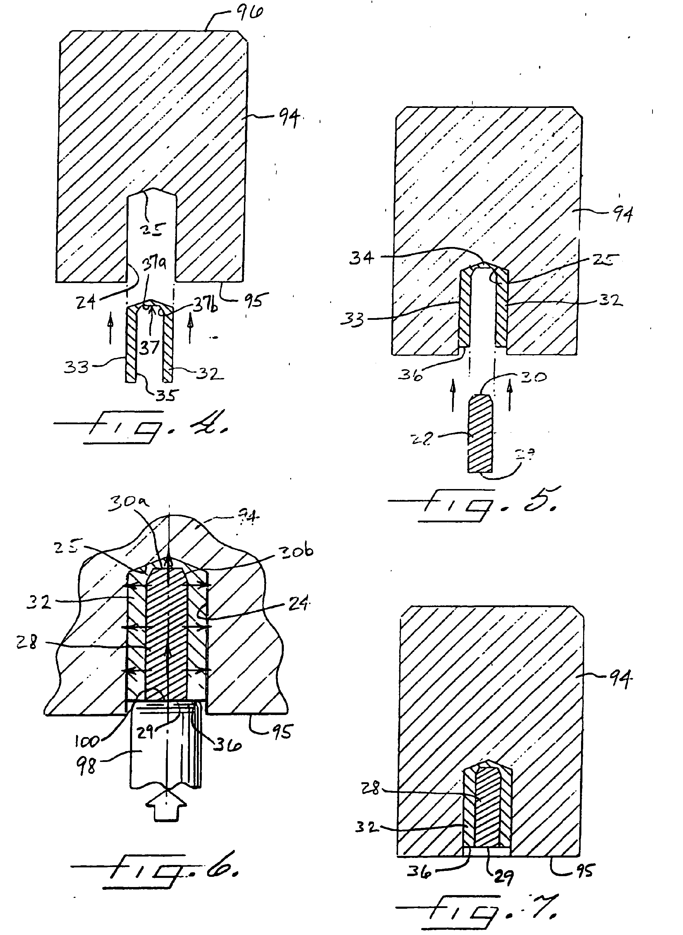

With primary reference to FIGS. 2 and 3, the holder **16** is open at the rear end **19** thereof such that the holder is of cup-shaped configuration and defines an internal cavity **22**. The front end wall **18** of the holder includes a cylindrical post **23** which extends rearwardly into the internal cavity **22** and along the longitudinal axis. A receptacle **24** is formed in the front face **20** of the end wall **18** and extends rearwardly along the longitudinal axis and into a portion of the length of the post **23**. The receptacle **24** is generally cylindrical, and preferably includes a conical inner end wall **25**. Preferably, the half angle of the conical inner end wall **25** is about 65° to 75°.

An emissive element assembly **26** is mounted in the receptacle **24** and comprises a generally cylindrical emissive element **28** which is disposed coaxially along the longitudinal axis and which has a circular outer end face **29** lying in the plane of the front face **20** of the holder **16**. The emissive element **28** also includes a generally circular inner end face **30** which is disposed in the receptacle **24** and is opposite the outer end face **29**. The emissive element **28** is composed of a metallic material which has a relatively low work function, in a range of about 2.7 to 4.2 ev, and so that it is adapted to readily emit electrons upon an electrical potential being applied thereto. Suitable examples of such materials are hafnium, zirconium, tungsten, and alloys thereof.

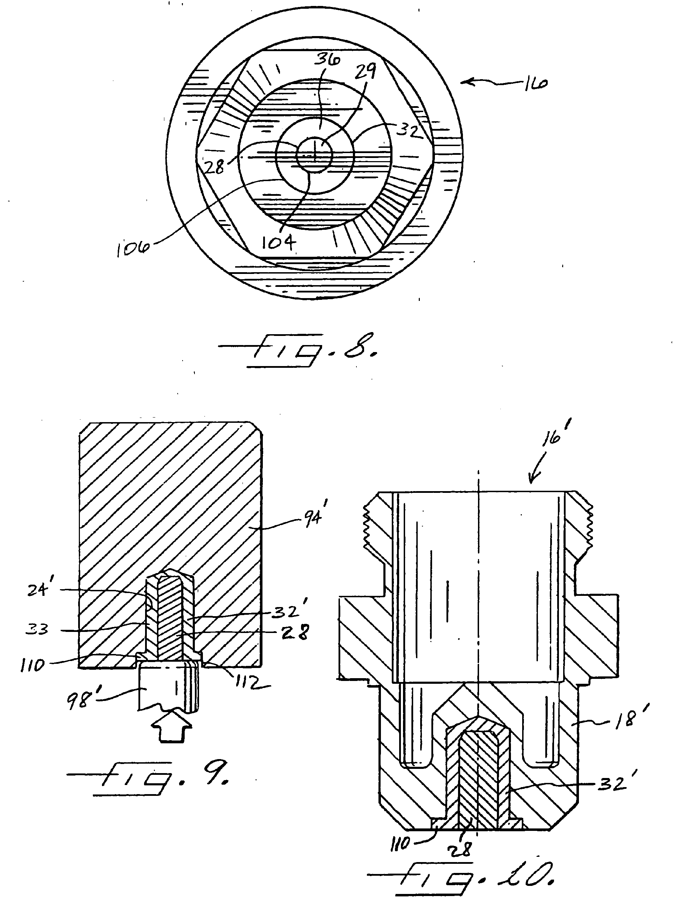

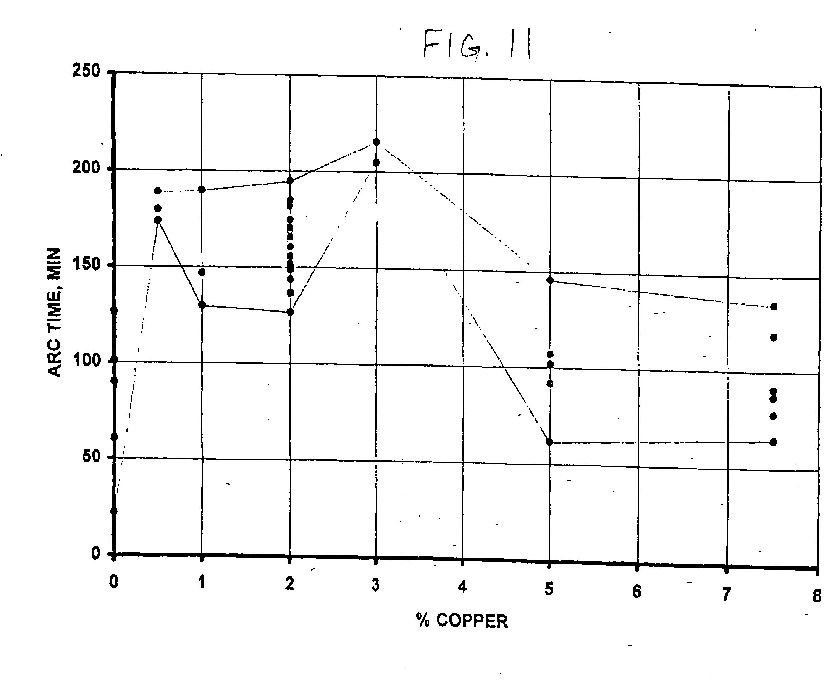

The emissive element assembly **26** also includes a relatively non-emissive separator **32** which is positioned in the receptacle **24** coaxially about the emissive element **28**. The separator **32** may have a peripheral wall **33** (FIGS. 4-5) extending the length of the emissive element **28** and a closed bottom wall **34**. The peripheral wall **33** is illustrated as having a substantially constant outer diameter over the length of the separator, although it will be appreciated that other geometric configurations would be consistent with the scope of the invention. When the receptacle **24** includes the conical end wall **25**, the closed bottom wall **34** preferably defines an outer end face that is conical such that it matches the shape of the conical end wall **25**. The separator **32** includes an opening such as a cylindrical cavity **35** formed therein in the form of a blind cylindrical hole coaxial with the longitudinal axis, and the emissive element **28** substantially completely fills the cavity **35**. As best seen in FIG. 4, the bottom wall **34** of the separator defines an inner surface **37** against which the emissive element **28** abuts. The inner surface **37** preferably is formed to have a planar circular center portion **37a** perpendicular to the longitudinal axis and a frustoconical outer portion **37b** coaxial with the longitudinal axis. The half angle of the frustoconical portion **37b** preferably is about 30°. The emissive element **28** preferably has the inner end face **30** formed to match the shape of the inner surface **37**, and thus the inner end face **30** includes a planar circular center portion **30a** and a frustoconical outer portion **30b** (FIG. 6) having a half angle of about 30°.

The separator **32** also includes an outer end face **36** which is generally flush with the circular outer end face **29** of the emissive element **28**, and is also generally flush with the front face **20** of the holder **16**. The separator **32** preferably has a radial thickness of at least about 0.25 mm (0.01 inch) at the outer end face **36** and along its entire length, and preferably the diameter of the emissive element **28** is about 30-80 percent of the outer diameter of the end face **36** of the separator. As a specific example, the emissive element **28** typically has a diameter of about 2 mm (0.08 inch) and a length of about 6 mm (0.24 inch), and the outer diameter of the separator **32** is about 4 mm (0.16 inch).

The separator **32** is composed of a metallic material having a work function which is greater than that of the material of the holder **16**, and also greater than that of the material of the emissive element **28**. More specifically, it is preferred that the separator be composed of a metallic material having a work function of at least about 4.3 ev.

In accordance with the present invention, the separator **32** is formed of a silver alloy material comprising silver alloyed with about 0.5 to 4 percent of an additional material selected from the group consisting of copper, aluminum, iron, lead, zinc, and alloys thereof. As previously noted, the additional material may be in elemental or oxide form, and thus the term "copper" as used herein is intended to refer to both the elemental form as well as the oxide form, and similarly for the terms "aluminum" and the like. It has been discovered that, unexpectedly, the service life of the electrode is degraded if the separator is formed of silver that is too pure, for example, 0.9997 fine silver. It has also been discovered that if the separator is formed of silver containing substantially more than 3 percent of copper, the service life of the electrode begins to decline. Thus, there tends to be an optimum range of about 0.5 to 4 percent for the additional material of the silver alloy which yields an optimum service life for the electrode.

More preferably, the separator is constructed of silver alloyed with about 1.5 to 3.5 percent of the additional material. Copper is preferred for the additional material, and a particularly preferred alloy percentage is about 2-3 percent copper. While not wishing to be bound by theory, the inventors believe that one possible explanation for the unexpected advantages of the present invention is that the impurities (i.e., the copper) raise the work function of the silver or in some other way reduce the likelihood of the silver supporting the arc. Another possible explanation is that pure silver has a relatively low tensile yield strength, and accordingly a separator made of substantially pure silver may allow a gap to open between the separator and the copper holder when the torch is shut off and the electrode cools (since silver has a greater coefficient of thermal expansion than copper). The gap tends to cause overheating of the separator during subsequent operation. By virtue of the addition of copper to the silver, the separator may not yield as much under the stress of thermal expansion, and this may explain why electrodes made with the silver-copper separators have less propensity to developing gaps at the interface between the copper holder and the separator.

With reference again to FIG. 1, in the illustrated embodiment, the electrode **14** is mounted in a plasma arc torch body **38**, which includes gas and liquid passageways **40** and **42**, respectively. The torch body **38** is surrounded by an outer insulated housing member **44**.

A tube **46** is suspended within the central bore **48** of the electrode **14** for circulating a liquid cooling medium such as water through the electrode structure **14**. The tube **46** has an outer diameter smaller than the diameter of the bore **48** such that a space **49** exists between the tube **46** and the bore **48** to allow water to flow therein upon being discharged from the open lower end of the tube **46**. The water flows from a source (not shown) through the tube **46**, along the post **23** in the holder **16**, and back through the space **49** to the opening **52** in the torch body **38** and to a drain hose (not shown). The passageway **42** directs injection water into the nozzle assembly **12** where it is converted into a swirling vortex for surrounding the plasma arc as further explained below. The gas passageway **40** directs gas from a suitable source (not shown), through a gas baffle **54** of suitable high temperature material into a gas plenum chamber **56** via inlet holes **58**. The inlet holes **58** are arranged so as to cause the gas to enter in the plenum chamber **56** in a swirling fashion. The gas flows out from the plenum chamber **56** through coaxial bores **60** and **62** of the nozzle assembly **12**. The electrode **14** retains the gas baffle **54**. A high-temperature plastic insulator body **55** electrically insulates the nozzle assembly **12** from the electrode **14**.

The nozzle assembly **12** comprises an upper nozzle member **63** which defines the first bore **60**, and a lower nozzle member **64** which defines the second bore **62**. The upper nozzle member **63** is preferably a metallic material, and the lower nozzle member **64** is preferably a metallic or ceramic material. The bore **60** of the upper nozzle member **63** is in axial alignment with the longitudinal axis of the torch electrode **14**.

The lower nozzle member **64** is separated from the upper nozzle member **63** by a plastic spacer element **65** and a water swirl ring **66**. The space provided between the upper nozzle member **63** and the lower nozzle member **64** forms a water chamber **67**.

The lower nozzle member **64** comprises a cylindrical body portion **70** which defines a forward or lower end portion and a rearward or upper end portion, with the bore **62** extending coaxially through the body portion **70**. An annular mounting flange **71** is positioned on the rearward end portion, and a frustoconical surface **72** is formed on the exterior of the forward end portion coaxial with the second bore **62**. The annular flange **71** is supported from below by an inwardly directed flange **73** at the lower end of the cup **74**, with the cup **74** being detachably mounted by interconnecting threads to the outer housing member **44**. A gasket **75** is disposed between the two flanges **71** and **73**.

The bore **62** in lower nozzle member **64** is cylindrical, and is maintained in axial alignment with the bore **60** in the upper nozzle member **63** by a centering sleeve **78** of any suitable plastic material. Water flows from the passageway **42** through openings **85** in the sleeve **78** to the injection ports **87** of the swirl ring **66**, which inject the water into the water chamber **67**. The injection ports **87** are tangentially disposed around the swirl ring **66**, to impart a swirl component of velocity to the water flow in the water chamber **67**. The water exits the water chamber **67** through the bore **62**.

A power supply (not shown) is connected to the torch electrode **14** in a series circuit relationship with a metal workpiece which is usually grounded. In operation, a plasma arc is established between the emissive element **28** of the electrode which acts as the cathode terminal for the arc, and the workpiece which is connected to the anode of the power supply and which is positioned below the lower nozzle member **64**. The plasma arc is started in a conventional manner by momentarily establishing a pilot arc between the electrode **14** and the nozzle assembly **12**, and the arc is then transferred to the workpiece through the bores **60** and **62**.

### Method of Fabrication

FIGS. 4-7 illustrate a method (not being part of the invention) of fabricating the electrode in accordance with the present invention. As shown in FIG. 4, a cylindrical blank **94** of copper or copper alloy is provided having a front face **95** and an opposite rear face **96**. A generally cylindrical bore is then formed, such as by drilling, in the front face **95** so as to form the receptacle **24** as described above.

A separator **32** is formed of a silver alloy material. As previously described, the silver alloy material for the hollow cylindrical separator **32** comprises silver alloyed with about 0.25 to 10 percent of copper. The separator is configured and sized to closely fit within the receptacle **24**. The separator **32** may be formed by first forming a generally cylindrical solid blank and then forming a cylindrical cavity **35** coaxially therein, such as by drilling.

Next, as shown in FIG. 5, a generally cylindrical emissive element **28** is formed of a metallic material having a relatively low work function, as described above. The emissive element **28** is sized to closely fit within and to substantially completely fill the cavity **35** in the separator **32**. The emissive element **28** is inserted into the cavity **35** until the inner end **30** of the element **28** abuts the closed end wall **34** of the separator **32**, and the outer circular end face **29** of the element is generally flush with the outer end face **36** of the separator **32.**

With reference to FIG. 6, a tool **98** having a generally planar circular working surface **100** is placed with the working surface **100** in contact with the end face **29** and the end face **36** of the emissive element and separator, respectively. The outer diameter of the ' working surface **100** is slightly smaller than the diameter of the receptacle **24** in the holder blank **94**. The tool **98** is held with the working surface **100** generally coaxial with the longitudinal axis of the emissive element **28**, and force is applied to the tool so as to impart axial compressive forces to the emissive element **28** and the separator **32** along the longitudinal axis. For example, the tool **98** may be positioned in contact with the element and separator and then struck by a suitable device such as the ram of a machine. Regardless of the specific technique used, sufficient force is imparted so as to cause the emissive element **28** and the separator **32** to be deformed radially outwardly such that the emissive element **28** is tightly gripped and retained by the separator **32**, and the separator **32** is tightly gripped and retained by the metallic holder blank **94**, as shown in FIG. 7.

To complete the fabrication of the holder **16**, the rear surface **96** of the blank **94** is machined to form the open cup-shaped configuration having the cavity **22** therein and having an internal annular recess which coaxially surrounds the receptacle **24** so as to form the cylindrical post **23**, as shown in FIG. 3. The external periphery of the blank **94** is also shaped as desired, including formation of external threads **102** at the rear end. Finally, the front face **95** of the blank **94** and the end faces **29** and **36** of the emissive element and separator, respectively, are machined so that they are substantially flat and flush with one another.

FIG. 8 depicts an end elevation view of the finished electrode **16**. It can be seen that the end face **36** of the separator **32** separates the circular end face **29** of the emissive element from the front face **20** of the holder **16**. The end face **36** is annular having an inner perimeter **104** and an outer perimeter **106**. Because the separator **32** is formed of the silver alloy material having a higher work function than that of the emissive element **28**, the separator **32** serves to discourage the arc from detaching from the emissive element **28** and becoming attached to the holder **16**. Preferably, the radial thickness of the end face **36** between the inner perimeter **104** and the outer perimeter **106** is at least about 1 mm.

As previously noted, the invention also encompasses separators having configurations other than purely cylindrical. For example, the invention encompasses rivet-type separators having a hollow cylindrical body and an annular flange joined to the open end of the body. However, as mentioned above, the cold deformation process of manufacturing the electrode described above has been found to result in unacceptable electrodes, in terms of service life, when rivet-type electrodes are made of silver alloyed with higher percentages of copper, such as sterling silver which contains 7.5 percent copper. When electrodes are made through the cold deformation process with rivet-type separators, it has been found that, unexpectedly, significantly longer service life is obtained on average when the percentage of copper is reduced to below about 5 percent, specifically about 0.5 to 4 percent. More preferably, the rivet-type separator should contain about 2-3 percent copper.

An example not forming part of the invention is illustrated in FIGS. 9 and 10. FIG. 9 depicts a method in which a blank **94'** is provided with a stepped or counterbored receptacle **24'** for receiving a rivet-type separator **32'**. The separator **32'** has a hollow cylindrical body **33'** and an annular flange **110** joined to the open end of the body. The receptacle **24'** is shaped similarly to the separator, and thus includes a counterbored portion **112** of larger diameter than the remainder of the receptacle. A tool **98'** is used to apply force to the end face of the emissive element **28** and to the outer face of the annular flange **110** so as to cause radial expansion of the emissive element and separator, as previously described. The electrode is then finished as described above, resulting in a completed electrode **16'** as shown in FIG. 10. The electrode **16'** includes a holder **18'**, separator **32'**, and emissive element **28**.

As a specific example, the emissive element **28** has a diameter at its end face **29** of about 2mm (0.08 inch), and the outer diameter of the separator's annular flange **110** is about 6.3 mm (0.25 inch). The separator **32'** advantageously is formed of silver alloyed with about 0.5 to 4 percent of copper, and more preferably about 2-3 percent copper.

Testing was performed to investigate the effect of the specific silver alloy composition on electrode service life. A number of identically configured electrodes having rivet-type separators as shown in FIG. 10 were prepared in accordance with the cold deforming process described above. The copper content of the separator was varied from about zero percent (i.e., substantially pure silver) to about 7.5 percent, by preparing specially formulated heats of silver-copper alloy and manufacturing separators from the special heats. Each of the electrodes was installed into a plasma arc torch and the torch was operated cyclically for 30 seconds with the arc on (at 400 amps) and 4 seconds with the arc off, repeating the on-off cycle until a "failure" was observed. A "failure" was characterized either by total destruction of the electrode, such as when the electrode exploded (relatively rare), or by a physical change in the nozzle of the torch, such as a nick, groove, or the like, indicating that the arc was not properly centered on the emissive element of the electrode and/or that a double arc had become established.

FIG. 11 presents the results of the series of electrode tests. It can be seen that at about zero percent copper content, electrode life ranges from about 22 minutes to about 127 minutes. For 7.5 percent copper content (sterling silver), the life ranges from about 65 minutes to about 135 minutes. Although only two data points were obtained at 3 percent copper content, both of the tests exceeded 200 minutes of electrode life. A substantial number of data points were taken at 2 percent copper content, the life ranging from about 126 minutes to about 195 minutes, with the average being about 157 minutes. Three data points were obtained at 0.5 percent copper, the life ranging from about 174 minutes to about 189 minutes.

Thus, the data exhibit a remarkable and unexpected trend suggesting that an optimal range for copper content exists from about 0.5 percent to about 4 percent (although no data points were obtained at 4 percent, the data suggest that 4 percent would provide a significant improvement in electrode life compared to the data obtained at 5 percent copper). Furthermore, although there is considerable scatter in the data, the data nevertheless suggest that a peak occurs in the 2-3 percent copper range.

While the invention has been explained by reference to certain preferred embodiments thereof, and while these embodiments have been described in considerable detail, it will be understood that the invention is not limited to the described embodiments. Modifications and substitutions of equivalents may be made without departing from the scope of the invention as set forth in the appended claims.

## Claims

1. An electrode (14) for supporting an electric arc in a plasma arc torch (10), and comprising:
a metallic holder (16) having a front face and a receptacle (24) formed in the front face;
a relatively non-emissive separator (32) mounted in the receptacle (24), constructed of silver alloy, the separator (32) defining an opening therein; and
an emissive element (28) composed of a metallic material having a relatively low work function, the emissive element extending at least partially in the opening of the separator (32) such that the separator (32) is interposed between and separates the metallic holder (16) from the emissive element (28) at the front face of the holder (16), whereby the separator (32) acts to resist detachment of the electric arc from the emissive element (28) and attachment of the arc to the metallic holder (16), **characterized in that** the separator (32) is constructed of silver alloyed with 0.5 to 4,percent of an additional material selected from the group consisting of copper, aluminum, iron, lead, zinc, and alloys thereof.

2. The electrode of claim 1, wherein the separator is constructed of silver alloyed with about 1.5 to 3.5 percent of the additional material.

3. The electrode of claim 1, wherein the separator is constructed of silver alloyed with about 2-3 percent of copper.

4. The electrode of claim 1, wherein the separator comprises a hollow cylinder having a bottom wall closing one end thereof such that the opening is formed as a blind cylindrical hole, the separator including an annular end face at the other end of the separator, and the emissive element being cylindrical and substantially completely filling the opening.

5. The electrode of claim 4, wherein the annular end face of the separator is generally planar and the emissive element has a generally planar circular front face generally flush with the annular end face of the separator, and the diameter of the front face of the emissive element is less than about 80 percent of the outer diameter of the annular end face of the separator.

6. The electrode of claim 5, wherein the radial thickness between the inner and outer perimeters of the annular end face of the separator is at least about 1 mm.

7. The electrode of claim 1, wherein the receptacle includes a cylindrical bore having a conical inner end wall, and the separator includes a hollow cylinder having an end wall which defines a conical end face shaped to match the conical end wall of the receptacle, the conical end face of the separator abutting the conical inner end wall of the receptacle.

8. The electrode of claim 1, the electrode being made by a process comprising ' the steps of:
forming the metallic holder by forming a receptacle in a generally planar front face of a metallic blank, the receptacle extending along an axis generally normal to the front face and including an end wall within the blank;
forming the relatively non-emissive separator such that the separator has an outer surface extending between first and second end faces thereof, the outer surface being configured to fit closely within the receptacle in the metallic holder;
forming an opening in the first end face of the separator and extending thereinto;
forming the emissive element such that the emissive element is slidably insertable into the opening in the separator;
inserting the separator into the receptacle of the metallic holder such that the second end face of the separator abuts the end wall of the receptacle and the first end face of the separator is adjacent the front face of the metallic holder;
inserting an end of the emissive element into the opening of the separator until the end of the emissive element is seated within the separator; and
applying force to the emissive element and the first end face of the separator generally parallel to the axis of the metallic holder to axially compress the emissive element and the separator so as to cause the emissive element and the separator to plastically deform radially outwardly until the emissive element is gripped and retained by the separator and the separator is gripped and retained by the metallic holder.

9. The electrode of claim 1, further comprising:
a nozzle mounted adjacent the front face of the holder and having a flow path therethrough which is aligned with a longitudinal axis of the holder;
an electrical supply for creating an arc extending from the emissive element of the electrode through the nozzle flow path and to a workpiece located adjacent the nozzle; and
a gas supply for creating a flow of a gas between the electrode and the nozzle and so as to create a plasma flow outwardly through the nozzle flow path and to the workpiece.

## Patentansprüche

1. Elektrode (14) zum Erhalten eines elektrischen Lichtbogens in einem Plasma-Lichtbogenbrenner (10), die Folgendes umfasst:
einen metallischen Halter (16) mit einer Frontfläche und einer in der Frontfläche ausgebildeten Aufnahme (24);
einen in der Aufnahme (24) montierten relativ nicht emittierenden Separator (32), der aus Silberlegierung gefertigt ist, wobei der Separator (32) eine Öffnung darin definiert; und
ein emittierendes Element (28) bestehend aus einem metallischen Material mit einer relativ geringen Austrittsarbeit, wobei das emittierende Element wenigstens teilweise in der Öffnung des Separators (32) verläuft, so dass sich der Separator (32) zwischen dem metallischen Halter (16) und dem emittierenden Element (28) befindet und den metallischen Halter (16) an der Frontfläche des Halters (16) von dem emittierenden Element (28) trennt, wodurch der Separator (32) wirkt, um einer Trennung des elektrischen Lichtbogens von dem emittierenden Element (28) und einer Bindung des Lichtbogens an den metallischen Halter (16) zu widerstehen,
**dadurch gekennzeichnet, dass** der Separator (32) aus Silber gefertigt ist, das mit 0,5 bis 4 Prozent eines zusätzlichen Materials ausgewählt aus der Gruppe bestehend aus Kupfer, Aluminium, Eisen, Blei, Zink und Legierungen davon legiert ist.

2. Elektrode nach Anspruch 1, wobei der Separator aus Silber gefertigt ist, das mit etwa 1,5 bis 3,5 Prozent des zusätzlichen Materials legiert ist.

3. Elektrode nach Anspruch 1, wobei der Separator aus Silber gefertigt ist, das mit etwa 2-3 Prozent Kupfer legiert ist.

4. Elektrode nach Anspruch 1, wobei der Separator einen Hohlzylinder mit einer Bodenwand umfasst, die ein Ende davon verschließt, so dass die Öffnung als zylindrisches Blindloch ausgebildet ist, wobei der Separator eine ringförmige Endfläche am anderen Ende des Separators aufweist und das emittierende Element zylindrisch ist und die Öffnung im Wesentlichen vollständig ausfüllt.

5. Elektrode nach Anspruch 4, wobei die ringförmige Endfläche des Separators allgemein planar ist und das emittierende Element eine allgemein planare, kreisförmige Frontfläche allgemein bündig mit der ringförmigen Endfläche des Separators hat und der Durchmesser der Frontfläche des emittierenden Elementes weniger als etwa 80 Prozent des Außendurchmessers der ringförmigen Endfläche des Separators beträgt.

6. Elektrode nach Anspruch 5, wobei die radiale Dicke zwischen dem inneren und dem äußeren Umfang der ringförmigen Endfläche des Separators wenigstens etwa 1 mm beträgt.

7. Elektrode nach Anspruch 1, wobei die Aufnahme eine zylindrische Bohrung mit einer konischen inneren Endwand aufweist und der Separator einen Hohlzylinder mit einer Endwand aufweist, die eine konische Endfläche definiert, die so gestaltet ist, dass sie zur konischen Endwand der Aufnahme passt, wobei die konische Endfläche des Separators an die konische innere Endwand der Aufnahme anstößt.

8. Elektrode nach Anspruch 1, wobei die Elektrode mit einem Verfahren hergestellt wird, das die folgenden Schritte beinhaltet:
Ausbilden des metallischen Halters durch Gestalten einer Aufnahme in einer allgemein planaren Frontfläche eines metallischen Rohlings, wobei die Aufnahme entlang einer Achse allgemein normal zur Frontfläche verläuft und eine Endwand innerhalb des Rohlings beinhaltet;
Gestalten des relativ nicht emittierenden Separators so, dass der Separator eine Außenfläche hat, die zwischen seiner ersten und seiner zweiten Endfläche verläuft, wobei die äußere Fläche so konfiguriert ist, dass sie eng in die Aufnahme in dem metallischen Halter passt;
Gestalten einer Öffnung in der ersten Endfläche des Separators so, dass diese in diesen hinein verläuft;
Gestalten des emittierenden Elementes so, dass das emittierende Element gleitend in die Öffnung im Separator eingeführt werden kann;
Einführen des Separators in die Aufnahme des metallischen Halters, so dass die zweite Endfläche des Separators an die Endwand der Aufnahme anstößt und die erste Endfläche des Separators neben der Frontfläche des metallischen Halters liegt;
Einführen eines Endes des emittierenden Elementes in die Öffnung des Separators, bis das Ende des emittierenden Elementes in dem Separator sitzt; und
Aufbringen von Kraft auf das emittierende Element und die erste Endfläche des Separators allgemein parallel zur Achse des metallischen Halters, um das emittierende Element und den Separator axial zu komprimieren, um zu bewirken, dass sich das emittierende Element und der Separator radial auswärts plastisch verformen, bis das emittierende Element von dem Separator erfasst und gehalten wird und der Separator von dem metallischen Halter erfasst und gehalten wird.

9. Elektrode nach Anspruch 1, die ferner Folgendes umfasst:
eine Düse, die neben der Frontfläche des Halters montiert ist und einen Strömungsweg **dadurch** aufweist, der mit einer Längsachse des Halters ausgerichtet ist;
eine Stromversorgung zum Erzeugen eines Lichtbogens, der von dem emittierenden Element der Elektrode durch den Strömungsweg der Düse und zu einem neben der Düse befindlichen Werkstück verläuft; und
eine Gasversorgung zum Erzeugen eines Stroms eines Gases zwischen der Elektrode und der Düse und zum Erzeugen eines Plasmaflusses auswärts durch den Strömungsweg der Düse und zum Werkstück.

## Revendications

1. Electrode (14) pour supporter un arc électrique dans une torche à arc plasma (10) et comprenant:
un support métallique (16) comportant une face avant et un réceptacle (24) formé dans la face avant;
un séparateur relativement non émissif (32) monté dans le réceptacle (24), construit en alliage d'argent, le séparateur (32) définissant une ouverture dedans; et
un élément émissif (28) constitué par un matériau métallique présentant une fonction de retrait relativement faible, l'élément émissif s'étendant au moins partiellement dans l'ouverture du séparateur (32) de telle sorte que le séparateur (32) soit interposé entre le support métallique (16) et l'élément émissif (28) au niveau de la face avant du support (16) et les sépare, par le biais duquel le séparateur (32) opère pour résister à un détachement de l'arc électrique vis-à-vis de l'élément émissif (28) et à un attachement de l'arc sur le support métallique (16),
**caractérisée en ce que** le séparateur (32) est construit en argent allié avec de 0,5 à 4 pourcents d'un matériau additionnel choisi parmi le groupe comprenant du cuivre, de l'aluminium, du fer, du plomb, du zinc et des alliages afférents.

2. Electrode selon la revendication 1, dans laquelle le séparateur est construit en argent allié avec environ de 1,5 à 3,5 pourcents du matériau additionnel.

3. Electrode selon la revendication 1, dans laquelle le séparateur est construit en argent allié avec environ de 2 à 3 pourcents de cuivre.

4. Electrode selon la revendication 1, dans laquelle le séparateur comprend un cylindre creux comportant une paroi de fond fermant une extrémité afférente de telle sorte que l'ouverture soit formée en tant que trou cylindrique borgne, le séparateur incluant une face d'extrémité annulaire au niveau de l'autre extrémité du séparateur, et l'élément émissif étant cylindrique et remplissant sensiblement complètement l'ouverture.

5. Electrode selon la revendication 4, dans laquelle la face d'extrémité annulaire du séparateur est de forme générale plane et l'élément émissif présente une face avant circulaire de forme générale plane affleurant de façon générale la face d'extrémité annulaire du séparateur, et le diamètre de la face avant de l'élément émissif est inférieur à environ 80 pourcents du diamètre externe de la face d'extrémité annulaire du séparateur.

6. Electrode selon la revendication 5, dans laquelle l'épaisseur radiale entre les périmètres interne et externe de la face d'extrémité annulaire du séparateur est d'au moins environ 1 mm.

7. Electrode selon la revendication 1, dans laquelle le réceptacle inclut un alésage cylindrique comportant une paroi d'extrémité interne conique, et le séparateur inclut un cylindre creux comportant une paroi d'extrémité qui définit une face d'extrémité conique conformée pour s'adapter à la paroi d'extrémité conique du réceptacle, la face d'extrémité conique du séparateur venant en butée contre la paroi d'extrémité interne conique du réceptacle.

8. Electrode selon la revendication 1, l'électrode étant réalisée au moyen d'un procédé comprenant les étapes de:
formation du support métallique en formant un réceptacle dans une face avant de forme générale plane d'une ébauche métallique, le réceptacle s'étendant le long d'un axe généralement normal à la face avant et incluant une paroi d'extrémité à l'intérieur de l'ébauche;
formation du séparateur relativement non émissif de telle sorte que le séparateur comporte une surface externe s'étendant entre ses première et seconde faces d'extrémité, la surface externe étant configurée pour s'ajuster de façon serrée à l'intérieur du réceptacle dans le support métallique;
formation d'une ouverture dans la première face d'extrémité du séparateur et extension de celle-ci dedans;
formation de l'élément émissif de telle sorte que l'élément émissif puisse être inséré par coulissement dans l'ouverture ménagée à l'intérieur du séparateur;
insertion du séparateur à l'intérieur du réceptacle du support métallique de telle sorte que la seconde face d'extrémité du séparateur vienne en butée contre la paroi d'extrémité du réceptacle et que la première face d'extrémité du séparateur soit adjacente à la face avant du support métallique;
insertion d'une extrémité de l'élément émissif à l'intérieur de l'ouverture du séparateur jusqu'à ce que l'extrémité de l'élément émissif soit assise à l'intérieur du séparateur; et
application d'une force sur l'élément émissif et sur la première face d'extrémité du séparateur généralement parallèlement à l'axe du support métallique afin de comprimer axialement l'élément émissif et le séparateur de manière à faire en sorte que l'élément émissif et le séparateur se déforment plastiquement radialement vers l'extérieur jusqu'à ce que l'élément émissif soit capturé et retenu par le séparateur et que le séparateur soit capturé et retenu par le support métallique.

9. Electrode selon la revendication 1, comprenant en outre:
un éjecteur monté de manière à être adjacent à la face avant du support et comportant une voie d'écoulement le traversant, laquelle est alignée avec un axe longitudinal du support;
une alimentation électrique pour créer un arc s'étendant depuis l'élément émissif de l'électrode au travers de la voie de circulation d'éjecteur et jusqu'à une pièce de travail située de manière à être adjacente à l'éjecteur; et
une alimentation en gaz pour créer une circulation d'un gaz entre l'électrode et l'éjecteur et de manière à créer une circulation de plasma vers l'extérieur au travers de la voie d'écoulement d'éjecteur et jusqu'à la pièce de travail.
